Europäisches Patentamt

European Patent Office

Office européen des brevets

(11) Veröffentlichungsnummer : **0 100 902**
**B1**

# EUROPÄISCHE PATENTSCHRIFT

(45) Veröffentlichungstag der Patentschrift :
16.04.86

(51) Int. Cl.⁴ : **A 23 J   7/00**

(21) Anmeldenummer : **83106895.2**

(22) Anmeldetag : **14.07.83**

(54) Verfahren zur Gewinnung von mit Phosphatidylcholin hochangereicherten ethanolischen Phosphatidfraktionen.

(30) Priorität : **20.07.82 DE 3227001**

(43) Veröffentlichungstag der Anmeldung :
**22.02.84 Patentblatt 84/08**

(45) Bekanntmachung des Hinweises auf die Patenterteilung : **16.04.86 Patentblatt 86/16**

(84) Benannte Vertragsstaaten :
**AT BE CH DE FR GB IT LI LU NL SE**

(56) Entgegenhaltungen :
**EP-A- 0 054 770**
**FR-A- 1 274 363**
**FR-A- 2 388 823**
**Die Akte enthält technische Angaben, die nach dem Eingang der Anmeldung eingereicht wurden und die nicht in dieser Patentschrift enthalten sind.**

(73) Patentinhaber : **A. Nattermann & Cie. GmbH**
**Nattermannallee 1**
**D-5000 Köln 30 (DE)**

(72) Erfinder : **Napp, Wolfgang, Dr.**
**Leonhardsgasse 32**
**D-5000 Köln 40 (DE)**.

(74) Vertreter : **Redies, Bernd, Dr. rer. nat.**
**COHAUSZ & FLORACK Patentanwaltsbüro Schumannstrasse 97 Postfach 14 01 47**
**D-4000 Düsseldorf 1 (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der Erfindung ist ein Verfahren zur Herstellung von mit Phosphatidylcholin hochangereicherten Phosphatidfraktionen durch intensives Rühren eines ethanolischen Extrakts aus entölten Rohphosphatiden in Gegenwart von Aluminiumoxid bei erhöhten Temperaturen.

Verfahren zur Reinigung von Phosphatidfraktionen durch Rührchromatographie an Aluminiumoxid sind an sich bekannt.

In der schweizerischen Patentschrift 361 088 und der US-Patentschrift 2 945 869 ist ein Reinigungsverfahren zur Gewinnung von Sojaphosphatidfraktin beschrieben, die als Emulgatoren für intravenös zu applizierende Fettemulsionen verwendet werden sollen. Hierbei werden alkoholische Lösungen von bereits entölten oder stark ölverarmten Rohphosphatiden mit Aluminiumoxid bei Raumtemperatur behandelt, um hierdurch die Lösungen an Phosphatidylethanolamin zu verarmen und vor allem weitgehend von Phosphatidylinosit zu befreien.

Aus der deutschen Patentschrift 27 18 797, Zusatz zu DE-PS-16 17 680, DE-PS-16 17 679 ist ein Reinigungsverfahren bekannt geworden, das von ethanolischen Extrakten aus ölhaltigen Rohphosphatiden ausgeht. Dabei werden die so erhaltenen alkoholischen Extrakte 2,5 bis 4 Stunden bei Raumtemperatur in Gegenwart von Aluminiumoxid intensiv gerührt.

Beiden Verfahren gemeinsam ist die Durchführung der Reinigungsoperationen bei Raumtemperatur.

Nach dem erfindungsgemäßen Verfahren wird die Rührchromatographie der ethanolischen Extrakte mit Aluminiumoxid bei Temperaturen zwischen 50 °C bis 70 °C durchgeführt, was zu einer überraschend starken Verminderung der zur Sättigung des Aluminiumoxids notwendigen Zeit führt. Wie vergleichende Versuche zeigten, ist der bei 20 °C nach 60 Minuten erzielte Reinigungseffekt bei 60 °C bereits innerhalb von 5 Minuten erreicht. Die Anwendung von Temperaturen oberhalb 50 °C wurde bisher für nicht durchführbar gehalten, da Zersetzungen befürchtet wurden.

Überraschenderweise wurde aber auch bei längeren Kontaktzeiten von 60 Minuten bei 60 °C keine Veränderung der Produktqualität festgestellt. Darüber hinaus wird durch Erhöhung der Betriebstemperatur der Rührchromatographie auf Temperaturen von 60 °C oder darüber die zur Sättigung des Aluminiumoxids notwendige Zeit stark verkürzt, was einen erheblich verringerten Bedarf an Aluminiumoxid zur Folge hat, da bei Raumtemperatur nur eine teilweise Beladung des Aluminiumoxids erreicht wird.

Die als Ausgangssubstanzen des erfindungsgemäßen Verfahrens verwendeten Alkoholextrakte werden aus entölten pflanzlichen Rohphosphatiden, insbesondere Sojabohnenrohphosphatid, durch Extraktion mit 96 %igem Ethanol hergestellt.

Die Extraktlösung, die gegebenenfalls zusätzlich mit 96 %igem Ethanol verdünnt werden kann, wird vorzugsweise vor Zugabe des Aluminiumoxids auf eine Temperatur oberhalb 50 °C aufgeheizt und bis zur Einstellung der Gleichgewichts-Sättigungskonzentration bei der gewünschten Temperatur, vorzugsweise 60 °C, gehalten. Die notwendige Menge Aluminiumoxid errechnet sich aus dem gelösten Feststoff in der Extraktlösung unter Berücksichtigung des Anteils an Phosphatidylethanolamin und beträgt das 2,5- bis 4,5fache des Feststoffanteils. Nach der vorgesehenen Kontaktzeit zwischen Extraktlösung und Aluminiumoxid wird das beladene Aluminiumoxid sofort abgetrennt. Die nach dem Eindampfen des Lösungsmittels im Vakuum enthaltenen erfindungsgemäßen Phosphatidfraktionen haben einen Phosphatidylcholin-Anteil von 70-75 %.

Das erfindungsgemäße Verfahren wird durch die folgenden Beispiele näher erläutert.

Beispiel 1

a) 5 l einer ethanolischen Phosphatid-Extraktlösung (aus entöltem Sojabohnenrohphosphatid) mit einem Feststoffgehalt von 6,37 % und einer Zusammensetzung von 50,9 % Phosphatidylcholin, 17,4 % Phosphatidylethanolamin, 0,9 % Lysophosphatidylcholin und einer Säurezahl von 16,6 (alle Werte bezogen auf Trockensubstanz) werden mit 2 l Äthanol 96 %ig und 1,1 kg $\gamma$-$Al_2O_3$ in einem Rührbehälter 5 Minuten bei 60 °C intensiv gerührt. Die Lösung war vor dem Versuch bereits auf Versuchstemperatur aufgeheizt worden. Nach der Rührzeit wurde das beladene $Al_2O_3$ sofort von der Lösung abgetrennt. Die klare Lösung wurde im Vakuum zur Trockne eingedampft.

Ausbeute: 161 g Feststoff (Phosphatidfraktion)

= 63 % d. Th. Feststoffausbeute.

Die so hergestellte Phosphatidfraktion hatte eine Zusammensetzung von:

75,4 % Phosphatidylcholin, 6,6 % Phosphatidylethanolamin, 1 % Lyso-Phosphatidylcholin und eine Säurezahl von 5,64 (alle Werte bezogen auf die Trockensubstanz).

b) Zum Vergleich wurde ein analoger Ansatz wie in Versuchsteil a) (ebenfalls mit 1,1 kg $\gamma$-$Al_2O_3$) jedoch 60 Minuten bei 20 °C intensiv gerührt und wie zuvor beschrieben aufgearbeitet.

Ausbeute: 145 g Feststoff (Phosphatidfraktion)

= 57 % d. Th. Feststoffausbeute

Die so hergestellte Phosphatidfraktion hatte eine Zusammensetzung von:

75,4 % Phosphatidylcholin, 4,2 % Phosphatidylethanolamin, 1 % Lyso-Phosphatidylcholin und eine Säurezahl von 2,26 (alle Werte bezogen auf die Trockensubstanz).

Beispiel 2

a) 5 l einer ethanolischen Phosphatid-Extraktlösung (aus entöltem Sojabohnenrohphosphatid) mit einem Feststoffgehalt von 6,37 % und einer Zusammensetzung von 50,9 % Phosphatidylcholin, 17,4 % Phosphatidylethanolamin, 0,9 % Lyso-Phosphatidylcholin und einer Säurezahl von 16,6 (alle Werte bezogen auf die Trockensubstanz) werden mit 2 l Ethanol 96 %ig verdünnt, auf 60 °C aufgeheizt und zusammen mit 0,79 kg $\gamma$-Al$_2$O$_3$ in einem Rührbehälter 40 Minuten bei 60 °C intensiv gerührt. Nach der Rührzeit wurde das beladene Al$_2$O$_3$ sofort von der Lösung abgetrennt. Die klare Lösung wurde im Vakuum zur Trockne eingedampft.

Ausbeute : 188 g Feststoff (Phosphatidfraktion)
= 74 % d. Th. Feststoffausbeute.

Die so hergestellte Phosphatidfraktion hatte eine Zusammensetzung von :

69,8 % Phosphatidylcholin, 5,4 % Phosphatidylethanolamin, und 1 % Lyso-Phosphatidylcholin.

b) Zum Vergleich wurden 5 l ethanolische Extraktlösung in derselben Zusammensetzung wie unter a) beschrieben mit 2 l Ethanol 96 %ig verdünnt und mit 1,0 kg $\gamma$-Al$_2$O$_3$ 40 Minuten bei 20 °C intensiv gerührt. Anschließend wurde das beladene Al$_2$O$_3$ sofort von der Lösung abgetrennt.

Die klare Lösung wurde im Vakuum zur Trockne eingedampft.

Ausbeute : 178 g Feststoff (Phosphatidfraktion)
= 70 % d. Th. Feststoffausbeute.

Die so zum Vergleich hergestellte Phosphatidfraktion hatte eine Zusammensetzung von :

69,9 % Phosphatidylcholin, 5,7 % Phosphatidylethanolamin und 1,1 % Lyso-Phosphatidylcholin (alle Werte bezogen auf die Trockensubstanz).

Die so hergestellten Phosphatidfraktionen sind stets frei von Mono-phosphatidylinosit.

## Patentanspruch

Verfahren zur Herstellung von mit Phosphatidylcholin hoch angereicherten Phosphatidfraktionen durch Behandlung des aus handelsüblichen entölten pflanzlichen Rohphosphatiden erhaltenen Alkoholextrakts mit Aluminiumoxid, dadurch gekennzeichnet, daß die vorzugsweise vor der Zugabe des Aluminiumoxids auf eine Temperatur oberhalb von 50 °C erwärmte Ethanollösung mit der auf den Feststoffgehalt bezogenen 2,5 bis 4,5fachen Menge Aluminiumoxid versetzt und unter intensivem Rühren bei Temperaturen zwischen 50 °C-70 °C vorzugsweise bei 60 °C bis zur Einstellung der gleichgewichts-Sättigungskonzentration weitergerührt wird.

## Claim

Process for the preparation of phosphatide fractions highly enriched with phosphatidylcholine by treatment of the alcohol extract obtained from commercially available de-oiled crude vegetable phosphatides with aluminium oxide, characterised in that the ethanol solution, which is preferably warmed to a temperature above 50 °C before addition of the aluminum oxide, is mixed with 2.5 to 4.5 times the amount, based on the solids content, of aluminum oxide, and intensive stirring is continued at temperatures between 50 °C and 70 °C, preferably at 60 °C, until the equilibrium saturation concentration is established.

## Revendication

Procédé de préparation de fractions de phosphatides fortement enrichies en phosphatidylcholine par traitement de l'extrait d'alcool obtenu à partir de phosphatides bruts d'origine végétale débarrassés d'huile que l'on trouve dans le commerce avec de l'oxyde d'aluminium, caractérisé en ce qu'on mélange la solution éthanolique chauffée à une température supérieure à 50 °C de préférence avant l'addition de l'oxyde d'aluminium avec une quantité d'oxyde d'aluminium 2,5 à 4,5 fois supérieure par rapport à la teneur en solide et en ce qu'on agite encore de façon intensive à des températures comprises entre 50 °C et 70 °C, de préférence à 60 °C, jusqu'à l'établissement de la concentration de saturation à l'équilibre.